(19) Europäisches Patentamt
European Patent Office
Office européen des brevets

(11) **EP 1 833 051 A1**

(12) **EUROPEAN PATENT APPLICATION**

(43) Date of publication:
**12.09.2007 Bulletin 2007/37**

(51) Int Cl.:
**G11B 20/10** (2006.01)   **G11B 27/32** (2006.01)
**H04H 1/00** (2006.01)

(21) Application number: **05028286.2**

(22) Date of filing: **08.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Westdeutscher Rundfunk**
**50600 Köln (DE)**
• **Nokia GmbH**
**40470 Düsseldorf (DE)**
• **Institut für Rundfunktechnik GmbH**
**80939 München (DE)**

(72) Inventors:
• **Ewert, Matthias**
**51107 Köln (DE)**
• **Richter, Werner**
**80935 München (DE)**
• **Quelle, Hans-Christoph**
**40468 Düsseldorf (DE)**

(74) Representative: **Konle, Tilmar**
**Benderstrasse 23 a**
**81247 München (DE)**

(54) **Method for automated recording and marking of analogue and digital audio and video signals by means of ancillary and control information transmitted in parallel to those signals**

(57) For automated recording and marking of analogue an digital audio/video signals, ancillary and control information is used which is transmitted in parallel to the audio and/or video signal, namely "Item Toggle Bit", "Item Running Bit" or "Music/Speech - Identification". By the interconnected analysis of the ancillary and control information "Item Toggle Bit" and "Item Running Bit" or "Item Toggle Bit" and "Speech/Music-Identification" the control software of a recording device is put in the position to automatically perform the recording, the precise determination of the start and stop time of the recording and the addressing of designating text for the audio and video recording on the basis of the ancillary and control information in accordance with the settings of the user (Figure 7).

Fig. 7:

EP 1 833 051 A1

**Description**

In addition to audio/video signals, ancillary information e.g. text and control signals is transmitted via broadcast transmission paths. This ancillary information is partially described for the radio in the RDS specification EN 50067. An extension of this ancillary information shall be described herein after which is briefly referred to as "Radiotext Plus (RT+) Specification". This "Radiotext Plus (RT+) Specification" is an integral part of the present invention.

**Introduction**

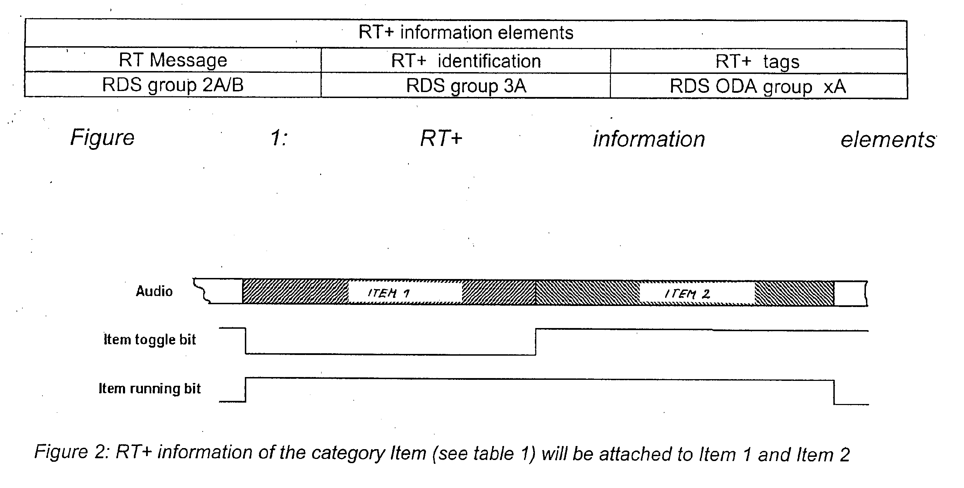

RT+ is designed to let the listener (or user) take additional benefit from the RDS radiotext service, by enabling receivers to offer him/her direct access to specific elements of Radiotext messages (e.g. to the title of the currently broadcast song, to news, to telephone numbers such as those used for voting, to web addresses for browsing web content offered by the radio programme provider etc.). These RT+ information elements carried in the RDS radiotext (RT) messages, are identified by their location within the RT messages and by the class code of their Content Type. So a receiver is able to store the different RT+ information elements and the listener may then select and request a specific content type from the storage at any instant in time that fits the listener's needs. The advantage of this method is that the listener is no longer forced to watch a lot of information passing by. He/she rather gets the opportunity to select specifically his/her favourite information to be shown on a static display. Moreover RT+ gives the possibility to present selected RT message elements to car drivers on a quasi static display without any major risk of distracting the attention of the driver. Furthermore RT+ is well suited for mobile phones with built-in FM receivers: telephone numbers may be routed directly from the RDS RT to the dialer. Last but not least RT+ can also be used for radio broadcasting via DVB-S (see chapter 6). It may be useful for DRM and DAB, as well.
RT+ is based on RDS RT messages and is completely backwards compatible to the RT. All additional information necessary for implementing the RT+ service is carried in the RDS group 3A and in an appropriate RDS ODA group (see Figure 1).

**RT+ tag**

When an RT message like "You are listening to "House of the rising sun" by Eric Burdon" is sent out, the RT+ information elements Title and Artist are marked by two RT+ tags.
An RT+ tag consists of three elements

- RT Content Type

- Start Marker pointing to the position (inside the RT message) of the first character of that RT + information element

- Length Marker indicating the additional length (in addition to the character at the start position) of that RT + information element

The Content Type is taken from a list with 64 entries (see Table 1). For the example given above the two tags are as follows:

| RT Content Type | ITEM.TITLE |
|---|---|
| Start Marker | 22 |
| Length Marker | 22 |

| RT Content Type | ITEM.ARTIST |
|---|---|
| Start Marker | 50 |
| Length Marker | 10 |

Start Marker and Length Marker can be derived from the following scheme below:
You are listening to "House of the rising sun" by Eric Burdon 0----0----1----1----2----2---3----3----4----4----5----5----6---0----5----0----5----0----5----0----5----0----5----0----5----0----5---0--
**[0009]** The addresses of the RT characters range from 0 to 63, so the start marker can take the same values.
The length marker is ranging from 0 to 63 and from 0 to 31 respectively (see 5.2). If two RT+ elements are contained in the Radiotext, they shall not overlap. The tag information sent out shall not change during the lifetime of the associated Radiotext.

**RT+ information elements and data model**

The content of RT+ information elements is carried in RDS RT messages. Their content is classified as content type and is given as a code in the RT+ tag.

**List of RT Content Types**

The list of defined Content Types is given in Table 1. There are 64 classes of Content Types available which a programme service provider can offer and the listener can select from, each with a specific class code. The classes can be grouped in the following categories:

**• Item**

The programme is made up of a sequence of programme items which may consist again of several items. In popular music programmes an item is a song, in a programme with classical music it may be a complete symphony. A speech based programme item may also be assembled from different items1. An item can be described by one, several or even all classes of this category, but for the duration of the item, the associated RT+ information element of each class can only have a single value, e.g. the RT+ information element classified as title will be fixed to "House of the rising sun" until the start of the next song.

**• Info**

RT+ information elements of this category carry textual service information that is more or less unrelated to the audio service, but is offering important additional information to the listener, including info about alarms, advertisements and events.

**• Programme**

Content types of this category are describing the programme service.

**• Interactivity**

Telephone numbers, SMS numbers, e-mail addresses or web addresses (URLs) are given.

A programme item may consist of only one item (e.g. radio play) and can be designated by RT+ classes of the category Item in table 1 The listener may send contributions to chat conversations to a chat center. These contributions may be broadcast by the radio station. Questions for voting may be sent as RT+ content. The listener may send his/her response back to the vote center.

**• Open classes**

While all other classes describe precisely the Content Type, also to permit their interpretation by automatic routines within the receiver terminal or by a human user, the Open classes can be freely defined just as required for a specific programme service provider . The interpretation is then dependent on the programme service and may require appropriate clients on the receiver terminal.

**• Descriptors**

An RT+ information element belonging to one of the categories above, can be complemented by an information element of the category descriptor. Both, shall always be transmitted in the same Radiotext just as the corresponding tags in the same application group. As an example: the descriptor GET_DATA contains the url-address or the SMS number for retrieving more data describing the RT+ element the descriptor is referring to. So the listener can get access to more information for the music item, to special news, events etc.

**Structures of RT + information elements**

For some classes, RT+ information elements may be structured by the programme service provider following a general pattern: e.g. results of football matches may be given as Content

Type INFO.Sport with two parts, one indicating the match and the other the result, e.g. "Bayern München:AC Milano 5:5"

This specification generalises the scheme given above as follows:

The two different parts are separated by two or more consecutive space/blank characters2 - i.e. redundant spaces. The redundant spaces serve as a delimiter between these two parts. The first part is called the "Key Word" and will be used primarily for explanation of the text which follows.

The key word carries an explanation for the user, whereas the second part may also carry a phone number, the SMS- or MMS-number or the email address to be contacted. This scheme permits an advanced receiver to accumulate all information (carried in the sequence of RT+ information elements of the same Content Type) and then to build one table for presentation to the user.

This scheme may be used for the categories "Info", "Programme" and "Interactivity", primarily for the denoted classes (see Table 1). It shall not be used for the categories "Item" and "Descriptor".

RT messages may contain several space characters for optimizing the layout in static displays. However if the RT messages are used in context with a RT+ service, redundant spaces in parts marked by RT+, are only allowed for the purpose of delimiting two or more parts of the RT+ content.

**Receiver data model**

The RT+ feature is designed to allow a broad range of receiver models with different display capabilities and memory complexity to be used. The broadcaster may provide special radio skins (templates) for presenting RT+ information on the receiver display. Each programme provider may deposit various templates for different programme types on a web server3. This web server can be addressed by the receiver for downloading a particular template (see also 5.1). This requires the receiver to be able to download actively external data (pull information by unicast, e.g. using a telephone connection). A simple receiver will store a small selection of RT+ information classes only. The storage will contain only the current content of the RT+ classes. The storage of a given Class will be overwritten by a new version of that same Class. The receiver may offer a choice to the listener to enable a selection of any particular, RT+ Class to be presented to him/her on the display. For example a listener may want to see one or several RT+ information classes of the category Item simultanously, i.e. Title and Artist of the currently received item.

More complex receivers will store not only the current content of several classes, but will use a memory to keep the information collected during the past. For reviewing then the list of earlier received items, it is essential then for the receiver that it can combine the different RT+ information elements (received at different times) correctly so that elements of different items are not mixed. For that purpose an item toggle bit changes every time a new item starts and the item running bit indicates whether the item is still running. Both bits are sent continuously together with every pair of the RT+ tags.

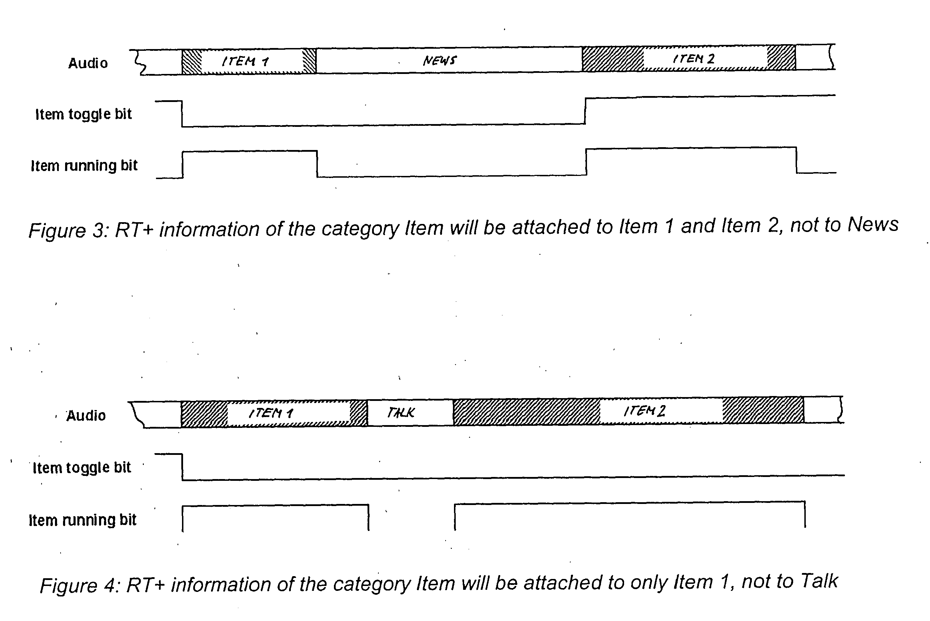

In Figures 2 to 4 there is shown by way of examples the setting of the Item toggle bit and the Item running bit for different audio sequences.

Receivers can provide more convenience by assembling an ordered cumulative list of all RT+ elements of a specific class, e.g. the class INFO.SPORT may be displayed as list of the football match results. This is easy to implement for those classes of the category INFO, that use redundant space characters as a delimiter between several parts of the text. The first part, the keyword, can be then used to establish a table which is ordered according to the keywords. Updating is also possible, if the keyword is not changed. Note: The broadcaster may set the Item toggle bit and the Item running bit as required. The Item running bit marks specific items such as a music item. The default setting for both, the Item toggle bit and the Item running bit, is "0". However, in such a case no specific RT+ information can be attached to any of the items by the receiver.

**Coding RT+ in RDS groups**

To transmit the RT+ tags the Open Data Application feature of RDS (ODA, see Standard Specification IEC 62106 sections

3.1.4 and 3.1.5.4) is used and the necessary details are being defined by this specification. The Application Identification (AID) assigned to RT+ is 4BD7 (hex). The message bits of group 3A carry control data for the application. The tag information to identify the RT+ information elements within the RT is carried by the application group. Only type A groups can be used.

**RT+ identification (RDS group 3A)**

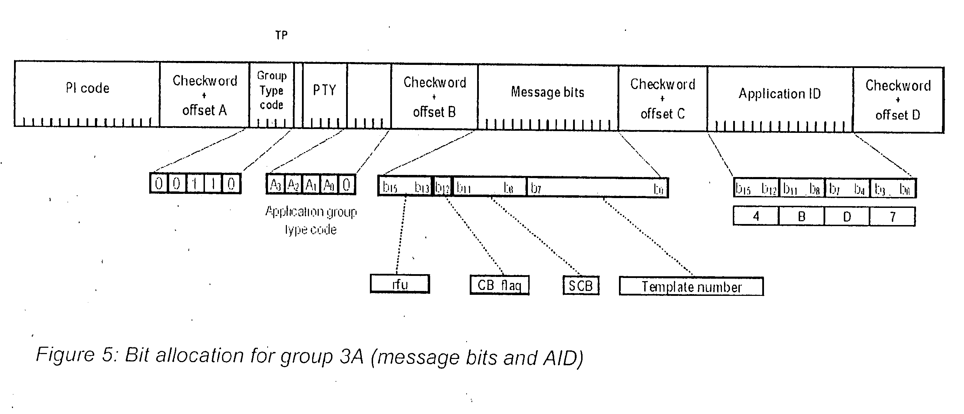

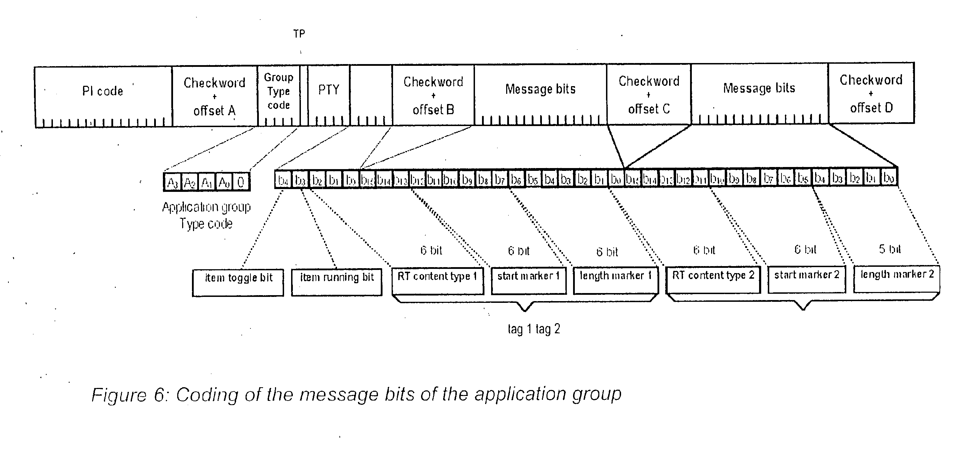

The coding of the message bits of group 3A (Application Identification for the ODA RT+) is shown in Figure 5.

Application group type code: The group type for transmitting the RT+ application data can be chosen from Table 6, IEC 62106 section 3.1.4.1. The group type code is signaled in block 2 of the 3A group.

The meaning of the message bits of group 3A is as follows:

• **rfu**

Reserved for future use, and not affecting any of the functions of the other bits.

• **CB flag**

The CB flag gives the information if there is a template available for the ongoing programme. The template may already be present in the receiver (downloaded previously) or can be downloaded currently if the user wants it. The identification of the desired template is accomplished by sending back from the receiver terminal to the web server the PI code (and if possibly also the extended country code), the Server Control Bits and the template number. If the CB flag is set to "0", no special radio skin (template) is available and Server Control Bits and Template number bits are reserved for future use. If the CB flag is set to "1", a special radio skin (template) is available for the ongoing transmission.

• **Server Control Bits (SCB)**

It may occur, that the same PI code is used repeatedly within a national area (e.g. for local programme stations far away from each other). In these cases the Server Control Bits are used to distinguish between programmes using the same PI code.

The Server Control Bits are allocated by the operator of the web server.

• **Template number**

The Template number gives the number of a specific template out of a choice of templates provided by the broadcaster. Up to 256 templates per programme service can be addressed.

**Coding of the RT+ tag**

In the message bits of the RT+ application group two RT+ tags are conveyed. All RT+ Classes or Content Types can be put into the one or the other tag of the application group. If an RT+ information element contains more than 32 characters, the associated tag information shall be coded in tag 1. Content Types of the category Descriptor are always referring to the Content Type in the other tag (in the same application group) and this gives then additional information. The start addresses in the tags may be chosen according to the needs during the RT generation. Therefore the sequence of the tags in the application group does not determine the sequence of the information elements in the RT.

The meaning of the message bits is as follows:

• **Item toggle bit**

This bit shall be toggled when a new item4 starts.

**• Item running bit**

-This bit shall be set to 1 if an item is running. Otherwise it shall be set to 0. Note: The Item toggle bit and the Item running bit will be set or reset independently from the tag information sent out currently. In the receiver these two bits may be used to group all Content Types of the category Item sent for one item and store them in memory (subsequently for several items) or, when storing and presenting information for only one item, to delete all information belonging to the elapsed item before starting to gather information for the new one. Even though not intended by this specification, these bits might be used for recording purposes.

**• RT Content Type**

This 6 bit value specifies the tags by assigning to them a Content Type according to the Class codes given in Table 1. If only one RT+ information element (tag) is used, then the Content Type in the second tag shall be set to "Dummy". If no RT+ information element is existing the Content

Type in both tags shall be set to "Dummy". In both cases, the bits in the start and length markers are then undefined.

**• Start marker**

This 6 bit value indicates the position of the first character of the RT+ information element within the Radiotext.
(Start marker 0: means the first character in the RT)

**• Length marker**

This 6 bit (or 5 bit for length marker in tag 2) value gives the additional length (number of characters following the first character at the start position) of the RT+ information element.

As it is not permitted that RT+ information elements overlap, only one element can comprise more than 32 characters and 5 bits are then sufficient for coding the length marker in tag 2.

When the receiver detects a change in the Radiotext A/B flag (indicating a new message) Radiotext decoding and decoding of RT+ tags may start simultaneously and RT+ information elements may be displayed or stored once the corresponding part of the radiotext is received completely error-free. The different RT+ information (classes) may be stored and then be displayed automatically or when the user retrieves a certain Content Type. For certain Content Types it may make sense to save more than the current or the last information in the memory ( e.g. a list of the titles belonging to the last 10 items). Depending on the reception conditions it may be necessary to evaluate the tag information of a few application groups before decoding RT + information.

Based on the control information "Item Running Bit" according to the above "Radiotext Plus (RT+) Specification", such control information in combination with the "Item Toggle Bit" is enabling terminals to record in an automated way markable audio and video files in a terminal by analysing and interconnecting of the broadcasted control signal and by memorizing in parallel of the broadcasted information. In this way it can be achieved to memorize broadcasted contents (e.g. music or radio drama audio) as single records in an automated way. The method can also used in connection with an existing music/speech identification (M/S), if any.

If control information of the same functionality for digital television is broadcasted for stationary, portable or mobile reception via DVB service information, DVB-H, DMB or similar specification, the method of automated recording of marked single contents is also applicable for video/audio signals to which control information is broadcasted according to the above mentioned specifications.

**Generation of the additional control information**

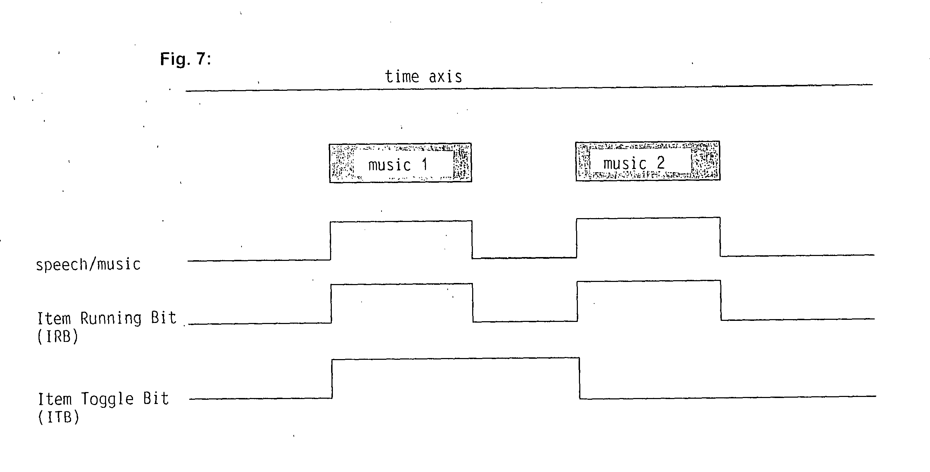

- ITEM RUNNING BIT (IRB) is set as soon as and as long as a contribution is running and, respectively, several contributions are sequentially running without gaps therebetween (see Figure 7).

- ITEM TOGGLE BIT (ITB) is changed (from 0 to 1 and, respectiveley, from 1 to 0) as soon as a new contribution is started (see Figure 7).

- MUSIC/SPEECH Identification (MS) is set to music as soon as and as long as music is broadcasted. The identification switches to speech if no music is running (see Figure 7).

For the described method it is necessary that the above mentioned control information is generated at the broadcaster side. This can be done automatically from the playout scheduling systems (SAS) and, respectively, by analysing of the controller contacts of the playout mixing desk.

**IRB:**

As soon as a new contribution is started, the ITB is set to 1 and remains on 1 as long as the contribution is running, even if one or more contributions are following without gap after the first contribution. Hence, the sole analysis of this bit does not yet allow a subdivision in single contributions.

**ITB:**

On starting of each new contribution the condition of the ITB is changed. The bit maintains its condition until the next start of a contribution. It marks the beginning of the contribution but not its end.

**M/S:**

On starting of music the bit is set to "music". This bit maintains set as long as music is broadcasted.

**Broadcasting of additional control information**

The existing "Radiotext Plus Specification" (including ITB) is supplemented by the IRB. The original idea of the IRB is the signalling that a content is running in order to enable receivers to delete the collected text information if a content which is displayed on a display does not longer run. In the herein described method this bit is used in connection with the ITB for the control of a record.

The described method is not solely dependent from the broadcasting of the control information according to the "Radiotext Plus Specification". If control information of the same functionality but with eventually different designation is broadcasted according to specifications which are defined for the specific transmission ways, e.g. DVB service information for the digital television DVB or DVB-H and, respectively, DMB for digital television on handhelds, the described method is also applicable in terminals which receive and record, if any, the video/audio signals according to the afore mentioned specifications.

**Analysis in the terminal**

**Method 1 - Analysis of Radiotext Plus/Control of the record by inter connection of Item Running Bit (RB) and Item Toggle Bit (ITB)**

Single contributions are designated by the ITB at the broadcaster side. If a new contribution is started the bit changes. By this way it is possible to address all text information to the one contribution at the receiver side. A receiver has to collect and store in its memory all text information which is received during a toggle phase. By this way e.g. title and singer are fixed during a music. After a renewed change a new contribution begins and it is again possible to address all newly received contents to this contribution. Since the ITB is, however, solely signalling the start but not the end of a contribution, this information is not sufficient for an automated recording. If, however, the IRB is additionally analysed in the receiver, and this IRB is always set to 1 as long as a contribution is running, the time to stop can be determined by the drop of the IRB. An audio record can be terminated and memorized in this way. Hence, on setting of the IRB a record can be started by this method which is stopped on deleting of the IRB.

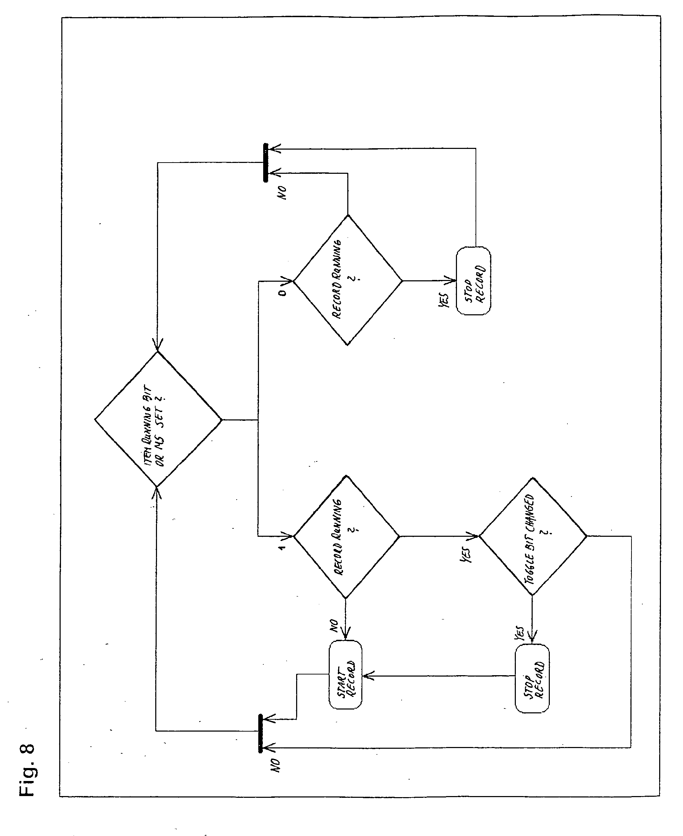

The record can afterwards be marked with the received text information (see above), e.g. title and singer hence, e.g. file name corresponds to title/singer. A special case is existing when two contributions are sequentially broadcasted without gap. In this case, a change of the ITB at maintained IRB is signalling the direct change between two contributions. At that point the running record can be stopped, memorized and marked (see above) and a new record can be directely started (see Fig. 8).

The recording of contributions can be anyway controlled in a comfortable way. There exists e.g. the possibility to firstly record and mark all contributions in general. Thereafter the user can/must delete undesired contributions. It is further possible to set filters for e.g. titles and/or singers which makes the storing of a record dependent from inputted values. In this way, generally all contributions are recorded from the beginning by the receiver since the text information is only collected during the run time of a contribution. Before the final memorizing/marking it will be checked whether the text information received during the associated toggle phase complies with the search item.

**Method 2 - Analysis of Radiotext Plus / Control of the record by interconnection of music/speech identification (MS) and Item Toggle Bit (ITB)**

In general, method 2 corresponds to method 1 with the difference that for music records MS is analysed in replacement of IRB. Due to the substantially more frequent broadcasting of MS according to the RDS specification a much more precise determination of start and stop can be obtained.

**Claims**

1. method for automated recording and marking of analogue and digital audio/video signals by means of ancillary and control information transmitted in parallel to the audio and/or video signal, namely "Item Toggle Bit", "Item Running Bit" or "Music/Speech-Identification", **characterized in that** by interconnected analysis of the ancillary and control information "Item Toggle Bit" and "Item Running Bit" or "Item Toggle Bit" and "Speech/Music-Identification" the control software of a recording device is put in the position to automatically perform the recording, the precise determination of the start and stop time of the recording and the addressing of designating text for the audio and video recording on the basis of the ancillary and control information in accordance with the settings of the user.

| RT+ information elements | | |
|---|---|---|
| RT Message | RT+ identification | RT+ tags |
| RDS group 2A/B | RDS group 3A | RDS ODA group xA |

*Figure 1: RT+ information elements*

*Figure 2: RT+ information of the category Item (see table 1) will be attached to Item 1 and Item 2*

| Audio | ITEM 1 | NEWS | ITEM 2 |

Item toggle bit

Item running bit

*Figure 3: RT+ information of the category Item will be attached to Item 1 and Item 2, not to News*

| Audio | ITEM 1 | TALK | ITEM 2 |

Item toggle bit

Item running bit

*Figure 4: RT+ information of the category Item will be attached to only Item 1, not to Talk*

EP 1 833 051 A1

TP

| PI code | Checkword + offset A | Group Type code | PTY | | Checkword + offset B | Message bits | Checkword + offset C | Application ID | Checkword + offset D |
|---|---|---|---|---|---|---|---|---|---|

| 0 | 0 | 1 | 1 | 0 |
|---|---|---|---|---|

| $A_3$ | $A_2$ | $A_1$ | $A_0$ | 0 |
|---|---|---|---|---|

Application group type code

| $b_{15}$ | $b_{13}$ | $b_{12}$ | $b_{11}$ | $b_8$ | $b_7$ | $b_0$ |
|---|---|---|---|---|---|---|

| $b_{15}$ | $b_{12}$ | $b_{11}$ | $b_8$ | $b_7$ | $b_4$ | $b_3$ | $b_0$ |
|---|---|---|---|---|---|---|---|

| 4 | B | D | 7 |
|---|---|---|---|

| rfu | | CB flag | | SCB | | Template number |
|---|---|---|---|---|---|---|

Figure 5: Bit allocation for group 3A (message bits and AID)

| PI code | Checkword + offset A | Group Type code | PTY | | Checkword + offset B | Message bits | Checkword + offset C | Message bits | Checkword + offset D |
|---|---|---|---|---|---|---|---|---|---|

$A_3$ $A_2$ $A_1$ $A_0$ 0

Application group Type code

$b_4$ $b_3$ $b_2$ $b_1$ $b_0$ $b_{15}$ $b_{14}$ $b_{13}$ $b_{12}$ $b_{11}$ $b_{10}$ $b_9$ $b_8$ $b_7$ $b_6$ $b_5$ $b_4$ $b_3$ $b_2$ $b_1$ $b_0$ $b_{15}$ $b_{14}$ $b_{13}$ $b_{12}$ $b_{11}$ $b_{10}$ $b_9$ $b_8$ $b_7$ $b_6$ $b_5$ $b_4$ $b_3$ $b_2$ $b_1$ $b_0$

6 bit  6 bit  6 bit  6 bit  6 bit  5 bit

| item toggle bit | item running bit | RT content type 1 | start marker 1 | length marker 1 | RT content type 2 | start marker 2 | length marker 2 |
|---|---|---|---|---|---|---|---|

tag 1 tag 2

*Figure 6: Coding of the message bits of the application group*

EP 1 833 051 A1

**Fig. 7:**

time axis

music 1    music 2

speech/music

Item Running Bit
(IRB)

Item Toggle Bit
(ITB)

Fig. 8

EP 1 833 051 A1

European Patent
Office

**EUROPEAN SEARCH REPORT**

Application Number

EP 05 02 8286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 967 748 A (DENON, LTD) 29 December 1999 (1999-12-29) * abstract * * paragraphs [0001] - [0017] * * paragraphs [0037] - [0081] * * figures 1-7 * | 1 | G11B20/10 G11B27/32 H04H1/00 |
| Y | US 6 631 111 B1 (KUMAKURA YASUSHI) 7 October 2003 (2003-10-07) * abstract * * column 1, line 5 - column 2, line 29 * * column 3, line 21 - column 9, line 21 * * figures 1-7 * | 1 | |
| A | "Radiotext plus (RTplus) Specification (Version 1.0)" 2005, , XP002374153 Retrieved from the Internet: URL:http://www.rds.org.uk/rds98/rds98.htm> * the whole document * | 1 | |

TECHNICAL FIELDS
SEARCHED      (IPC)

G11B
H04H

The present search report has been drawn up for all claims

| Place of search | Date of completion of the search | Examiner |
|---|---|---|
| Munich | 27 March 2006 | Sucher, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  ................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 05 02 8286

This annex lists the patent family members relating to the patent documents cited in  the above-mentioned European search report.
The members are as contained in the European Patent Office EDP file on
The European Patent Office is in no way liable for these particulars which are merely  given for the purpose of information.

27-03-2006

| Patent document cited in search report | | Publication date | Patent family member(s) | | Publication date |
|---|---|---|---|---|---|
| EP 0967748 | A | 29-12-1999 | JP | 2000013337 A | 14-01-2000 |
| | | | US | 6680931 B1 | 20-01-2004 |
| US 6631111 | B1 | 07-10-2003 | DE | 69709186 D1 | 24-01-2002 |
| | | | DE | 69709186 T2 | 11-07-2002 |
| | | | EP | 1012843 A1 | 28-06-2000 |
| | | | WO | 9923660 A1 | 14-05-1999 |
| | | | JP | 2001522121 T | 13-11-2001 |

EPO FORM P0459

For more details about this annex : see Official Journal of the European Patent Office, No. 12/82